# EUROPEAN PATENT SPECIFICATION

(11) **EP 0 863 035 B1**
(45) Date of publication and mention of the grant of the patent: **21.08.2002**
(21) Application number: 98103219.6
(22) Date of filing: 24.02.1998
(51) Int. Cl.: B60J 10/02, B60J 10/00

(54) **Method of assembly of a panel, in particular a transparent panel, on an edge of an aperture in a structure, in such a way that it can be readily dismantled, and a panel adapted for this assembly**
Verfahren zum Zusammenbau einer Platte, insbesondere einer durchsichtigen Platte, an einem Rand einer Öffnung in einem Bauteil mit Möglichkeit zu Demontieren, und Platte für solch eine Anordnung
Procédé d'assemblage d'un panneau, en particulier d'un panneau transparent, sur un bord d'une ouverture dans une construction, de façon démontable, et panneau adapté à un tel ensemble

(30) Priority: 27.02.1997 IT TO970165
(43) Date of publication of application: 09.09.1998
(73) Proprietor: IRISBUS ITALIA S.P.A., 10156 Torino (IT)
(72) Inventor: Fornari, Pierfortunato, 26030 Cappella Picenardi (IT)
(74) Representative: Franzolin, Luigi

(56) References cited:
- EP-A- 0 307 316
- DE-A- 3 514 055
- DE-A- 4 307 634
- US-A- 3 427 776
- US-A- 3 434 903
- US-A- 5 558 387
- PATENT ABSTRACTS OF JAPAN vol. 12, no. 471 (M-773), 9 December 1988 & JP 63 192608 A (MAZDA MOTOR), 10 August 1988,

## Description

The present invention relates to a method of assembly of a panel, in particular a transparent panel, on an edge of an aperture in a structure, in such a way that it can be readily dismantled, and a panel adapted for this assembly, in particular a transparent panel able to close an aperture of the passenger space of an automobile vehicle.

As is known, the leak-tight fastening of a transparent panel or window on a structure raises the problem that dismantling is difficult if the window has to be replaced. This is a particular problem in the automobile vehicle industry in which fixed windows, such as the windscreen and rear window, are glued directly on an edge of an aperture in the bodywork. In this case, the replacement of the window requires the removal of the broken or damaged window with the risk of damage to the bodywork.

Various methods of assembly of the window by means of a bead of adhesive paste adapted to harden, for instance by polymerisation, are known. In order to facilitate dismantling, a traction-resistant flexible cable is embedded in this bead in such a way as to leave at least one end of the cable exposed on the perimeter of the window. In order to dismantle the window, it is then necessary to pull this end of the cable in order progressively to cut the bead of hardened paste along a surface parallel to that of the window. Such method is known From EP-A-0307316.

In a known method, this cable is embedded in the bead of adhesive paste at the time at which the latter is applied to the window. This method has various drawbacks. The positioning of the cable in the bead requires a particular device. Moreover, the section of the bead is variable because the paste is viscous before it hardens. Lastly, the positioning of the window on the edge of the aperture requires particular care and a relatively long period of time during which the window has to be held firmly in position until the adhesive paste has hardened or polymerised sufficiently.

It has also been proposed to apply an additional bead in which the flexible cable is embedded to the window in advance or at the time of assembly. The section of this bead is such that it forms one or two retaining walls for the bead of adhesive paste. This method also raises the problem of the positioning of the window and its retention during the hardening of the adhesive paste. Moreover, it has the drawback that two different beads of adhesive paste have to be applied to the window at different times.

The object of the invention is to provide a method of fastening a transparent panel on the edge of an aperture and a transparent panel adapted for this assembly, which are as simple and economic as possible and remedy the drawbacks of the prior art described above.

According to the invention, this object is achieved by a method of assembly of a panel, in particular a transparent panel, on an edge of an aperture in a structure, in such a way that it can be readily dismantled, this assembly being carried out by means of a bead of adhesive paste adapted to harden and to be cut by a flexible cable adjacent to this bead by traction on one end of the cable, characterised by the following stages:
- gluing on a surface of this panel of a frame of a shape identical to the edge, this frame being formed by at least one double-sided adhesive strip covered on one surface by a protective support and having a wall bearing the cable;
- removing this protective support from the frame;
- applying the bead against this wall in order to embed the cable;
- applying this panel with the bead to the aperture in order to cause the adhesive layer and the bead to adhere to this edge.

A panel, in particular a transparent panel, adapted for assembly by means of the method of the invention, for instance for an aperture of the passenger space of an automobile vehicle, is provided with a frame formed by at least one double-sided adhesive strip covered by a protective support that can be removed, this double-sided adhesive strip having a wall on which the cable is secured, the bead being applied, in use, to the wall in order to embed the cable.

For comprehension of the invention, a preferred embodiment thereof is described below, by way of example, with reference to the accompanying drawings, in which:
Fig. 1 is a perspective view of a portion of transparent panel of the invention,
Fig. 2 is a cross-section through a frame assembly for the transparent panel of Fig. 1, on an enlarged scale;
Fig. 3 is a perspective view of an operation to prepare the frame for the assembly of the invention;
Fig. 4 is a perspective view of a portion of transparent panel during a stage of the assembly method of the invention;
Fig. 5 is a perspective view of a portion of transparent panel at the end of the stage of Fig. 4;
Fig. 6 is a perspective view of the portion of transparent panel during another stage of the assembly method;
Fig. 7 is a cross-section through a portion of transparent panel after assembly on the structure, on a reduced scale.

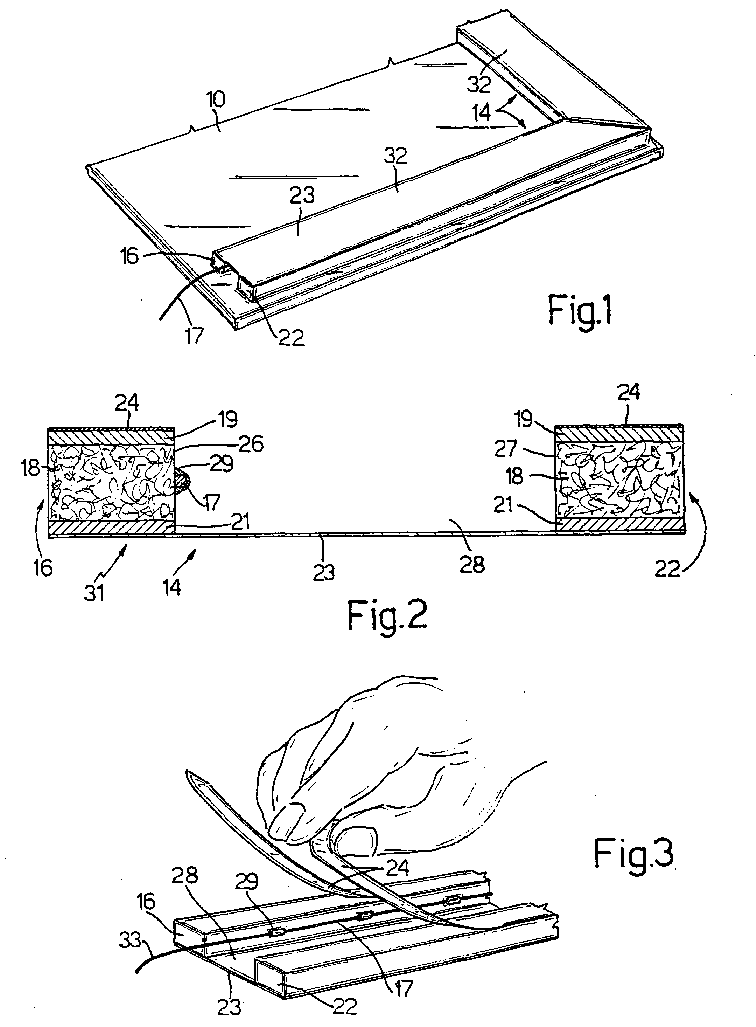

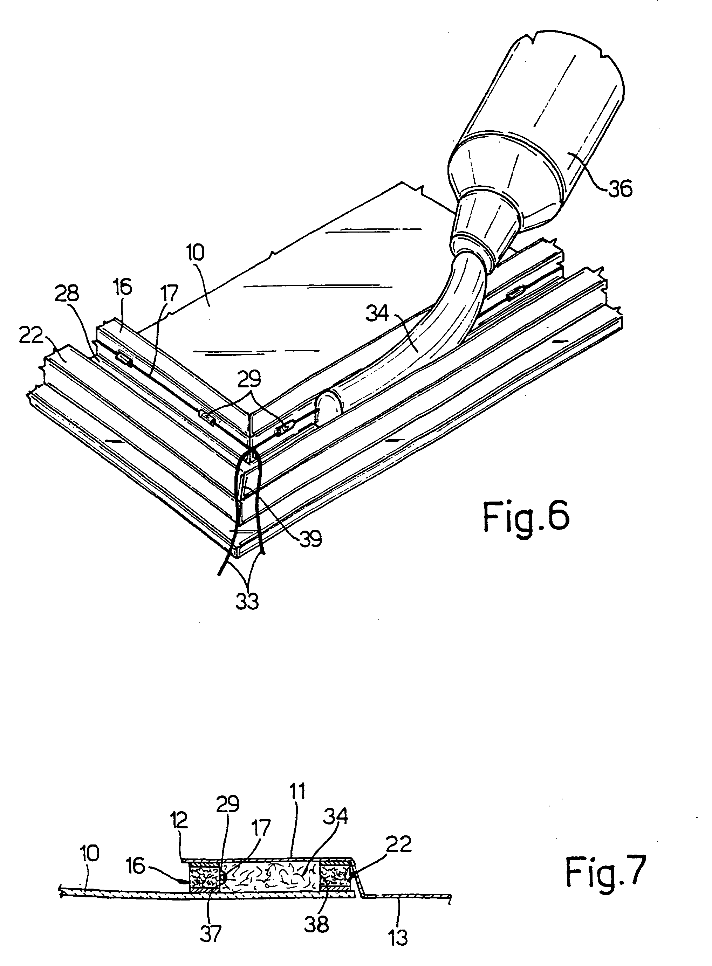

In Fig. 1, a transparent panel, for instance a window adapted to be mounted on an edge 11 (Fig. 7) of an aperture 12 provided in a structure 13 of any type, is shown by 10. The structure 13 is in particular formed by the bodywork of an automobile vehicle, and the opening 12 is that of the windscreen or rear window, or of any other window that cannot be opened. The edge 11 is then formed by a shaped profile of the bodywork 13. The structure 13 may, however, also be formed by the wall of a building, a boat or the like, while the window 10 may be a single, double or layered window. The panel 10 may also not be transparent and could for instance be made from metal.

According to the invention, the window 10 is provided with a double-sided adhesive frame 14 (Fig. 1) glued along the perimeter of the surface of the window 10 adapted to be secured to the edge 11. The frame 14 comprises at least one double-sided adhesive strip 16 bearing a traction-resistant, flexible cable 17, for instance a cable of string steel. The double-sided adhesive strip 16 is formed in particular by a bar 18 (Fig. 2) of plastic material, for instance a polyurethane of a density of between 50 and 60 kg/m³, having a rectangular section. The bar 18 has a thickness of some 3 mm and has two parallel opposite surfaces provided with two corresponding adhesive layers 19 and 21, each of a thickness of some 0.5 mm. The layer 19 is adapted to be glued to the window 10.

Advantageously, the frame 14 further comprises a second double-sided adhesive strip 22 identical to the double-sided adhesive strip 16. The two double-sided adhesive strips 16 and 22 are normally held parallel to one another by a common support 23 that can be removed and that also acts a protective layer for the two adhesive layers 21. Before they are glued to the window 10, the two double-sided adhesive strips 16 and 22 each have a corresponding removable strip 24 adapted to protect their respective adhesive layer 19.

The two double-sided adhesive strips 16 and 22 each have a wall 26, 27 perpendicular to the adhesive layers 19 and 21. The two walls 26 and 27 form a channel 28 adapted to contain, in use, a bead 34 (Fig. 7) of adhesive paste, as will be described in further detail below. Substantially in the centre of the wall 26, which faces the channel 28 and is borne by the double-sided adhesive strip 16 inside the frame 14, the cable 17 is secured by segments 29 (Figs. 2 and 3) of adhesive material. The segments 29 are disposed at an appropriate distance, for instance with a pitch of some 6-10 cm. The double-sided adhesive strips 16 and 22, with the support 23, the two strips 24 and the cable 17, therefore form an assembly 31 ready for the preparation and application of the frame 14 to the window 10.

The method of assembly of the window 10 on the edge 11 of the aperture 12 comprises the following stages.

A frame 14 of the same shape as the perimeter of the window itself is firstly glued on a surface of the window 10. For this purpose, portions 32 of the assembly 31 are angle cut to a length corresponding to that of the individual sides of the perimeter without cutting the cable 17 between the various portions 32, and the double-sided adhesive strip 16, provided with the cable 17, is disposed on the inner side of the frame 14 as shown in Fig. 1.

On the first and last portions 32, an end 33 (Fig. 6) of the cable 17 is left projecting from the bar 18. The two protection strips 24 of each portion 32 are then removed as shown in Fig. 3 as a result of which the two double-sided adhesive strips 16 and 22 are held parallel to one another by means of the common support 23.

The two double-sided adhesive strips 16 and 22 of each portion 32 are then glued to the corresponding side of the perimeter of the window 10, by bringing the adhesive layer 19 into contact with the window 10. It will be appreciated that the gluing of the frame 14 on the window 10 may be advantageously carried out in a workshop in order to provide, for instance for a repair mechanic, the window 10 ready for assembly as a spare part.

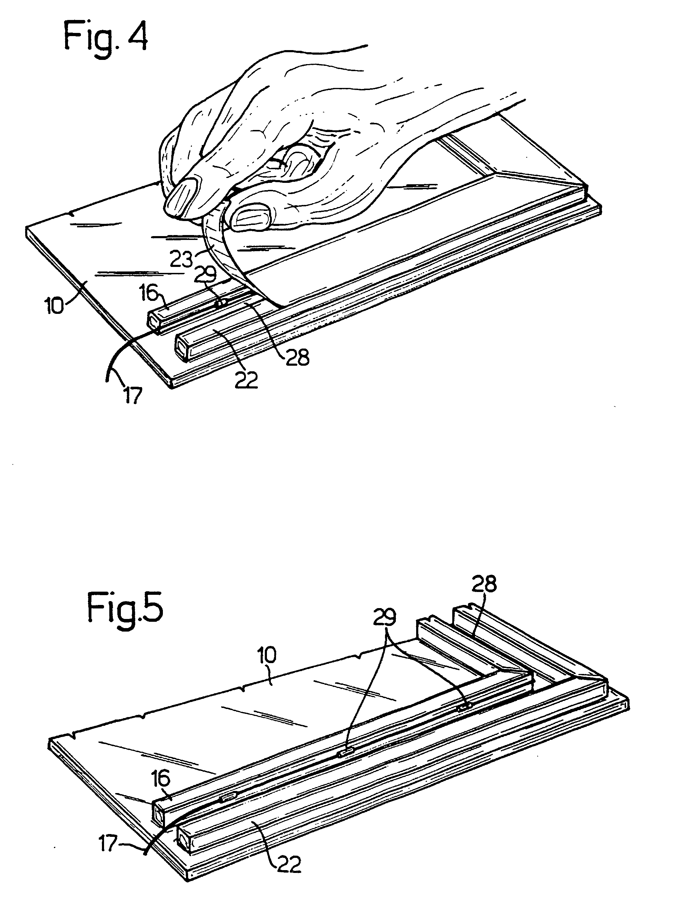

At the time of assembly, the common support 23 of the two double-sided adhesive strips 16 and 22 is removed from each portion 32 of the frame 14, as shown in Fig. 4, thereby exposing the channel 28. When the whole of the support 23 has been removed as shown in Fig. 5, a bead 34 of adhesive paste is spread in this channel 28. This paste may be of any known type, adapted to harden for instance by polymerisation. The adhesive paste may be contained in a tube 36 so that it can be spread by hand, as shown in Fig. 6, so as to fill the channel 28. As an alternative, especially in production workshops, the paste may be provided by a supply device and be spread by an appropriate device possibly controlled by a robot.

In both cases, the paste of the bead 34 is contained by the walls 26, 27 of the double-sided adhesive strips 16, 22 forming two well-defined opposite flanks 37 and 38 of the bead 34. The bead 34 thus incorporates the cable 17 in the middle of its inner flank 37. The exposed ends 33 of the cable 17 are disposed so as to project outwardly from a comer 39 of the frame 14 so that they are accessible from the outer flank 38 of the bead 34. Lastly, the window 10 is applied by causing the frame 14 and the bead 34 to bear on the edge 11 of the aperture 12 and by disposing the ends 33 of the cable 17 in the interspace between the window 10 and the edge 11.

The window 10 is then pressed so as cause the adhesive layer 21 of the two double-sided adhesive strips 16 and 22 to adhere to the edge 11. Since the adhesive layer adheres immediately, it holds the window 10 temporarily in position on the edge 11, preventing it from moving or slipping with respect thereto. It is not therefore necessary to hold the window 10 in position until hardening has taken place or until the paste of the bead 34 has polymerised. After polymerisation, the bead 34 ensures the permanent fastening of the window 10 on the edge 11 (Fig. 7).

When it is necessary to remove a window 10 from the aperture 12 it is enough to pull the exposed ends 33 of the cable 17. The latter then cuts the bead 34 to approximately half its thickness as a result of which the dismantling of the window is greatly facilitated. The remaining thickness of the bead 34 may be readily removed from the edge 11 taking the necessary steps to prevent any damage to the bodywork.

The advantages of the method of assembly of the window 10 of the invention with respect to the prior art are evident from the above description. In the first instance, the double-sided adhesive frame 14 makes it possible temporarily to hold the window 10 in position while awaiting the hardening of the bead 34 of the adhesive paste. Moreover, the frame 14, formed by two parallel double-sided adhesive strips 16 and 22 exactly defines the channel 28 in which the bead 34 is housed, therefore preventing any overflow of the paste. The frame 14 also makes it possible to embed the cable 17 in the bead 34 in a well-defined position without the use of an appropriate device.

In turn, the assembly 31 of the two double-sided adhesive strips 16 and 22 with the cable 17, the common protective support 23 and the protection strips 24 make it possible to produce the window 10 with the frame 14 as a spare part ready for use, for instance for automobile vehicles. This assembly 31 lastly enables the frame 14 to be disposed on the window 10 by the customer, for instance in cases in which the window cannot be replaced with the frame or the window 10 has to be cut on site, as in the case of building applications.

It is appreciated that various modifications and improvements may be made to the method of assembly described and/or to the window prepared for this assembly without departing from the scope of the claims. For instance, the frame 14 may be formed by a single double-sided adhesive strip 16 and the position of the cable 17 and the relative fastening to the bar 18 may be varied. The section of the bars 18 of the double-sided adhesive strips 16 and 22 may also be varied.

In order to mask the frame 14, a strip of the perimeter of the window 10 may be provided with an appropriate decorative motif. Lastly, for each frame 14, the exposed ends 33 of the cable 17 may be provided in more than one position or in each comer of this frame 14.

## Claims

1. A method of assembly of a panel, in particular a transparent panel, on an edge of an aperture in a structure, in such a way that it can be readily dismantled, this assembly being carried out by a bead (34) of adhesive paste, adapted to harden and to be cut by a flexible cable (17) adjacent to this bead (34) by pulling one end (33) of the cable (17), **characterised by** the following stages:
- gluing on a surface of the panel (10) of a frame (14) of a shape identical to the edge (11), this frame (14) being formed by at least one double-sided adhesive strip (16) covered on one abhesive layer (21) by a protective support (23) and having a wall (26) bearing this cable (17);
- removing this protective support (23) from the frame (14);
- applying the bead (34) to this wall (26) in order to embed the cable (17);
- applying this panel (10) and the bead (34) to the aperture (12) in order to cause the adhesive layer (21) and the bead (34) to adhere to this edge (11).

2. A method as claimed in claim 1, **characterised in that** the frame (14) comprises a pair of double-sided adhesive strips (16, 22) that are parallel and form a channel (28) adapted to contain the bead (34).

3. A method as claimed in claim 2, **characterised in that** the cable (17) is secured to the wall (26) facing the channel (28) of the double-sided adhesive strip (16) of the pair (16, 22) inside the frame (14).

4. A method as claimed in claim 3, **characterised in that** the double-sided adhesive strips (16, 22) are covered by a common protective support (23) adapted to maintain them in parallel, the stage of removal simultaneously exposing the double-sided adhesive strips (16, 22).

5. A method as claimed in claim 4, **characterised in that** the double-sided adhesive strips (16, 22) are each formed by a bar (18) of plastic material having two opposing parallel surfaces on each of which an adhesive layer (19, 21) is secured.

6. A method as claimed in claim 5, **characterised in that** the protective support (23) is disposed on one (21) of the adhesive layers (19, 21), the other (19) of these adhesive layers (19, 21) being covered by two corresponding protective strips (24) adapted to be removed to secure the frame (14) to the panel (10).

7. A method as claimed in one of claims 3 to 6, **characterised in that** the cable (17) is fixed on the wall (26) by segments (29) of adhesive material disposed at a predetermined spacing.

8. A method as claimed in any one of the preceding claims, **characterised in that** the panel comprises a window (10) that can be applied to an opening (12) of the passenger space of an automobile vehicle.

9. A panel, in particular a transparent panel, for an aperture (12), for instance for the passenger space of an automobile vehicle, this opening (12) being provided with an edge (11) for the assembly of this panel (10) by a bead (34) of adhesive paste, adapted to harden and to be cut by a flexible cable (17) adjacent to this bead (34), this cable (17) having an accessible end (33) exposed by the bead (34), **characterised in that** the panel (10) is provided with a frame (14) formed by at least one double-sided adhesive strip (16) covered by a removable protective support (23), this double-sided adhesive strip (16) having a wall (26) on which this cable (17) is secured, the bead (34) being applied, in use, to the wall (26) in such a way as to incorporate the cable (17).

10. A panel as claimed in claim 9, **characterised in that** the frame (14) comprises a pair of double-sided adhesive strips (16, 22) that are parallel and form a channel (28) adapted to contain the bead (34) forming two opposite flanks (37, 38) of this bead (34).

11. A panel as claimed in claim 10, **characterised in that** the double-sided adhesive strips (16, 22) are each formed by a bar (18) of plastic material having two opposing parallel surfaces, on which two corresponding adhesive layers (19, 21) are disposed, one (19) of these adhesive layers (19, 21) being glued on the panel (10) and the other (21) of these adhesive layers (19, 21) being covered by a common protective support (23) for the pair of double-sided adhesive strips (16, 22) which can be removed at the time of assembly on the edge (11).

12. A panel as claimed in claim 11, **characterised in that** the cable (17) is secured on the wall (26) facing the channel (28) of one (16) of the double-sided adhesive strips (16, 22) disposed towards the interior of the frame (14).

13. A panel as claimed in any one of claims 9 to 12, **characterised in that** the panel comprises a window (10) that can be mounted in an aperture (12) of the passenger space of an automobile vehicle.

## Patentansprüche

1. Verfahren zum Einbau einer Scheibe, insbesondere einer transparenten Scheibe, auf einer Kante einer Öffnung in einer Struktur, auf solche Weise, dass sie leicht ausgebaut werden kann, wobei der Einbau vorgenommen wird durch einen Wulst (34) aus Klebpaste, die dazu angepasst ist, auszuhärten und durch ein zu diesem Wulst (34) benachbartes flexibles Kabel (17) durch Ziehen eines Endes (33) des Kabels (17) durchtrennt zu werden, **gekennzeichnet durch** die folgenden Stufen:
- Kleben einer Fläche der Scheibe (10) auf einen Rahmen (14), der eine zu der Kante (11) identische Form besitzt, wobei der Rahmen (14) **durch** mindestens einen doppelseitigen Klebstreifen gebildet ist, der auf einer Klebschicht (21) **durch** einen Schutzträger(23) bedeckt ist und eine das Kabel(17) tragende Wand (26) besitzt;
- Entfernen des Schutzträgers (22) von dem Rahmen (14);
- Aufbringen des Wulstes (34) auf die Wand (26), um das Kabel (17) einzubetten;
- Aufbringen der Scheibe (10) und des Wulstes (34) auf die Öffnung (12), um die Klebschicht (21) und den Wulst (34) zu veranlassen, an der Kante (11) zu kleben.

2. Verfahren nach Anspruch 1, **dadurch gekennzeichnet, dass** der Rahmen (14) ein Paar doppelseitiger Klebstreifen (16, 22) aufweist, die parallel sind und einen Kanal (28) bilden, der zum Enthalten des Wulstes (34) ausgelegt ist.

3. Verfahren nach Anspruch 2, **dadurch gekennzeichnet, dass** das Kabel (17) an der Wand (26), die dem Kanal (28) des doppelseitigen Klebstreifens (16) des Paars (16, 22) in dem Rahmen (14) zugewandt ist, gesichert ist.

4. Verfahren nach Anspruch 3, **dadurch gekennzeichnet, dass** die doppelseitigen Klebstreifen (16, 22) durch einen gemeinsamen Schutzträger (23) abgedeckt sind, der dazu ausgelegt ist, diese parallel zueinander zu halten, wobei die Stufe des Entfernens gleichzeitig die doppelseitigen Klebstreifen (16, 22) freilegt.

5. Verfahren nach Anspruch 4, **dadurch gekennzeichnet, dass** die doppelseitigen Klebstreifen (16, 22) jeweils durch einen Stab (18) aus Kunststoffmaterial gebildet sind, der zwei gegenüberliegende, parallele Oberflächen besitzt, auf denen jeweils eine Klebschicht (19, 21) gesichert ist.

6. Verfahren nach Anspruch 5, **dadurch gekennzeichnet, dass** der Schutzträger (23) auf einer (21) der Klebschichten (19, 21) angeordnet ist, wobei der andere (19) dieser Klebschichten (19, 21) durch zwei entsprechende Schutzstreifen (24) bedeckt ist, die dazu ausgelegt sind, entfernt zu werden, um den Rahmen (14) an der Scheibe (10) zu sichern.

7. Verfahren nach einem der Ansprüche 3 bis 6, **dadurch gekennzeichnet, dass** das Kabel (17) an der Wand (26) durch Segmente (29) aus Klebmaterial befestigt ist, die unter einem vorbestimmten Abstand angeordnet sind.

8. Verfahren nach einem der vorhergehenden Ansprüche, **dadurch gekennzeichnet, dass** die Scheibe ein Fenster aufweist, die auf eine Öffnung eines Passagierraums eines Automobils aufgebracht werden kann.

9. Scheibe, insbesondere transparente Scheibe, für eine Öffnung (12), beispielsweise für den Passagierraum eines Automobils, wobei die Öffnung (12) mit einer Kante (11) für den Einbau der Scheibe (10) mittels eines Wulstes (34) aus Klebpaste ausgestattet ist, die dazu angepasst ist, auszuhärten und durch ein zu dem Wulst (34) benachbartes flexibles Kabel (17) durchtrennt zu werden, wobei das Kabel (17) ein zugängliches Ende (33) besitzt, das durch den Wulst(34) freigelegt ist, **dadurch gekennzeichnet, dass** die Scheibe (10) mit einem Rahmen (14) ausgestattet ist, der durch mindestens ein doppelseitiges Klebeband (16) gebildet ist, der durch einen entfernbaren Schutzträger (23) bedeckt ist, der doppelseitige Klebstreifen (16) eine Wand (26) besitzt, an der das Kabel (17) gesichert ist, wobei der Wulst (34) in Verwendung an der Wand (26) derart angebracht ist, dass er das Kabel (17) einschließt.

10. Scheibe nach Anspruch 9, **dadurch gekennzeichnet, dass** der Rahmen (14) ein Paar doppelseitiger Klebstreifen (16, 22)aufweist, die parallel zueinander sind und einen Kanal (28) bilden, der dazu ausgelegt ist, den Wulst (34) aufzunehmen, zwei gegenüberliegende Flanken (37, 38) dieses Wulstes (34) bildend.

11. Scheibe nach Anspruch 10, **dadurch gekennzeichnet, dass** die doppelseitigen Klebstreifen (16, 22) jeweils durch einen Stab (18) aus Kunststoffmaterial gebildet sind, der zwei gegenüberliegenden, parallele Oberflächen besitzt, auf welchem zwei entsprechende Klebschichten (19, 21) angeordnet sind, eine (19) dieser Klebschichten (19, 21) ist auf der Scheibe (10) aufgeklebt und die andere (21) dieser Klebschichten (19, 21) ist durch einen gemeinsamen Schutzträger(23) für das Paar der doppelseitigen Klebstreifen (16, 22) abgedeckt, der während des Einbaus auf der Kante (11) entfernt werden kann.

12. Scheibe nach Anspruch 11, **dadurch gekennzeichnet, dass** das Kabel (17) an der Wand (26) eines (16) der doppelseitigen Klebestreifen (16, 22)gesichert ist, die dem Kanal (28) zugewandt ist, angeordnet hin zum Inneren des Rahmens (14).

13. Scheibe nach einem der Ansprüche 9 bis 12, **dadurch gekennzeichnet, dass** die Scheibe ein Fenster (10) aufweist, das in einer Öffnung (12) des Passagierraums eines Automobils montiert werden kann.

## Revendications

1. Procédé d'assemblage d'un panneau, en particulier un panneau transparent, sur un bord d'une ouverture dans une construction, de telle manière qu'il puisse être aisément démonté, cet assemblage étant effectué au moyen d'un cordon (34) de pâte adhésive adaptée afin de durcir et pour être coupé par un câble flexible (17) adjacent à ce cordon (34), par une traction sur une extrémité (33) du câble (34), **caractérisé par** les étapes suivantes :
- collage sur une surface du panneau (10) d'un cadre (14) ayant une forme identique au bord (11), ce cadre (14) étant formé par au moins une bande adhésive double face (16) dont une surface (21) est recouverte d'un support protecteur (23) et ayant une paroi (26) qui supporte le câble (17) ;
- enlèvement de ce support protecteur (23) du cadre (14) ;
- application du cordon (34) contre cette paroi (26) afin d'incorporer le câble (17) ;
- application de ce panneau (10) avec le cordon (34) sur l'ouverture (12) afin de faire adhérer la couche adhésive (21) et le cordon (34) à ce bord (11).

2. Procédé selon la revendication 1, **caractérisé en ce que** le cadre (14) comprend une paire de bandes adhésives double face (16, 22) qui sont parallèles et forment un canal (28) adapté afin de contenir le cordon (34).

3. Procédé selon la revendication 2, **caractérisé en ce que** le câble (17) est fixé à la paroi (26) qui fait face au canal (28) de la bande adhésive double face (16) de la paire (16, 22) à l'intérieur du cadre (14).

4. Procédé selon la revendication 3, **caractérisé en ce que** les bandes adhésives double face (16, 22) sont recouvertes par un support protecteur commun (23) adapté afin de les maintenir parallèles, l'étape du dépôt exposant simultanément les bandes adhésives double face (16, 22).

5. Procédé selon la revendication 4, **caractérisé en ce que** les bandes adhésives double face (16, 22) sont formées chacune par une barre (18) en matière plastique ayant deux surfaces opposées parallèles, sur chacune de desquelles une couche adhésive (19, 21) est fixée.

6. Procédé selon la revendication 5, **caractérisé en ce que** le support protecteur (23) est disposé sur une (21) des couches adhésives (19, 21), l'autre (19) de ces couches adhésives (19, 21) étant recouverte par les deux rubans protecteurs correspondants (24) adaptés pour être enlevés afin de fixer le cadre (14) au panneau (10).

7. Procédé selon l'une quelconque des revendications 3 à 6, **caractérisé en ce que** le câble (17) est fixé sur une paroi (26) par des segments (29) de matériau adhésif, disposés à un espacement prédéterminé.

8. Procédé selon l'une quelconque des revendications précédentes, **caractérisé en ce que** le panneau comprend une vitre (10) qui peut être appliquée à une ouverture (12) de l'espace passager d'un véhicule automobile.

9. Panneau, en particulier un panneau transparent, pour une ouverture (12), par exemple pour l'espace passager d'un véhicule automobile, cette ouverture (12) étant prévue avec un bord (11) pour l'assemblage de ce panneau (10) par un cordon (34) de pâte adhésive, adaptée afin de durcir et pour être coupé par un câble flexible (17) adjacent à ce cordon (34), ce câble (17) ayant une extrémité accessible (33) exposée par le cordon (34), **caractérisé en ce que** le panneau (10) est prévu avec un cadre (14) formé par au moins une bande adhésive double face (16) recouverte par un support protecteur qui peut être enlevé (23), cette bande adhésive double face (16) ayant une paroi (26) sur laquelle ce câble (17) est fixé, le cordon (34) étant appliqué, en service, à la paroi (26) de façon à incorporer le câble (17).

10. Panneau selon la revendication 9, **caractérisé en ce que** le cadre (14) comprend une paire de bandes adhésives double face (16, 22) qui sont parallèles et forment un canal (28) adapté afin de contenir le cordon (34) formant deux flancs opposés (37, 38) de ce cordon (34).

11. Panneau selon la revendication 10, **caractérisé en ce que** les bandes adhésives double face (16, 22) sont formées chacune par une barre en matière plastique (18) ayant deux surfaces opposées parallèles, sur lesquelles deux couches adhésives correspondantes (19, 21) sont disposées, l'une (19) de ces couches adhésives (19, 21) étant collée sur le panneau (10) et l'autre (21) de ces couches adhésives (19, 21) étant recouverte par un support protecteur commun (23) de la paire de bandes adhésives double face (16, 22) qui peuvent être enlevées au moment de l'assemblage sur le bord (11).

12. Panneau selon la revendication 11, **caractérisé en ce que** le câble (17) est fixé à la paroi (26) qui fait face au canal (28) de l'une (16) des bandes adhésives double face (16, 22) disposée vers l'intérieur du cadre (14).

13. Panneau selon l'une quelconque des revendications 9 à 12, **caractérisé en ce que** le panneau comprend une vitre (10) qui (10) qui peut être montée dans une ouverture (12) de l'espace passager d'un véhicule automobile
